# FASCICULE DE BREVET EUROPEEN

(11) **EP 3 195 983 B1**
(45) Date de publication et mention de la délivrance du brevet: **22.08.2018**
(21) Numéro de dépôt: 16197775.6
(22) Date de dépôt: 08.11.2016
(51) Int. Cl.: B25C 1/08

(54) **OUTIL DE FIXATION A GAZ ET SON PROCEDE DE FONCTIONNEMENT**
GASFIXIERUNGSWERKZEUG UND SEIN BETÄTIGUNGSVERFAHREN
GAS-FIXING TOOL AND METHOD FOR OPERATING SAME

(30) Priorité: 20.01.2016 FR 1650434
(43) Date de publication de la demande: 26.07.2017
(73) Titulaire: Illinois Tool Works Inc., Glenview, IL 60025 (US)
(72) Inventeur: HERELIER, Patrick, 07300 Saint Jean De Muzols (FR); CORDEIRO, Pierre, 26250 Livron Sur Drome (FR); RICORDI, Christian, 26300 Châteauneuf-sur-Isère (FR)
(74) Mandataire: Gevers & Orès

(56) Documents cités:
- EP-A2- 1 093 888
- DE-A1- 19 853 555
- FR-A1- 2 799 677
- US-A1- 2001 006 045

## Description

### DOMAINE TECHNIQUE

L'invention concerne un outil de fixation à gaz, tel que par exemple un cloueur, et son procédé de fonctionnement.

### ETAT DE L'ART

L'invention concerne les outils de scellement ou de fixation, dits à gaz, c'est-à-dire les outils comprenant un moteur à combustion interne fonctionnant par la mise à feu dans une chambre de combustion d'un mélange air-combustible, le combustible étant injecté dans la chambre par un dispositif d'injection depuis un récipient de combustible appelé cartouche de gaz. De tels outils sont destinés à entraîner des éléments de fixation dans des matériaux supports pour y fixer des pièces. Les cloueurs à gaz sont aujourd'hui très répandus. Comme combustible pour moteur à combustion interne, on peut citer par exemple l'essence, l'alcool, sous forme liquide et/ou gaz.

Le document US 2001/006045 A1 montre un outil de fixation à gaz avec une chambre de précombustion.

En général, un tel outil est portatif et comprend un boîtier dans lequel est monté le moteur à combustion interne de propulsion d'un piston d'entraînement d'un élément de fixation. Un tel outil peut comporter également une batterie d'alimentation électrique ainsi qu'une poignée de préhension, de manipulation et de tir sur laquelle est montée une détente d'actionnement de l'outil.

Un cycle de tir comprend plusieurs étapes telles que la distribution d'une quantité de combustible par la cartouche, l'admission du combustible dans la chambre, le mélange du combustible avec de l'air dans la chambre, l'allumage et la combustion du mélange pour l'entraînement du piston, et l'évacuation des gaz de combustion de la chambre.

On connaît des outils de fixation équipés de deux chambres de combustion, à savoir une chambre de précombustion et une chambre de combustion. Ce type d'outil comprend en pratique trois chambres car l'outil comprend une troisième chambre, que l'on appellera chambre de travail, dans laquelle est monté coulissant un piston d'entraînement des éléments de fixation. La combustion du mélange air-combustible est destinée à être initiée dans la chambre de précombustion, avant l'injection de ce mélange dans la chambre de combustion pour achever la combustion du mélange. Les chambres de précombustion et de combustion sont séparées l'une de l'autre par un clapet mobile ou déformable depuis une position dans laquelle il assure une communication fluidique entre les chambres de précombustion et de combustion, et une position dans laquelle il isole ces chambres l'une de l'autre, de préférence hermétiquement. L'outil comporte en général en outre des vannes d'admission et d'évacuation de gaz.

Dans la technique actuelle, le cycle de tir ou procédé de fonctionnement d'un outil de ce type comprend les étapes suivantes :
a) allumage du gaz dans la chambre de précombustion, entraînant une augmentation de la pression dans la chambre de précombustion,
b) déplacement ou déformation dudit clapet du fait de l'augmentation de la pression dans la chambre de précombustion au-delà d'un certain seuil, et passage de gaz dans la chambre de combustion,
c) combustion dudit gaz dans la chambre de combustion, entraînant une augmentation de la pression dans la chambre de combustion,
d) déplacement dudit piston depuis une position de repos jusqu'à une position de travail du fait de l'augmentation de pression dans la chambre de combustion,
e) déplacement inverse dudit piston depuis la position de travail du fait d'une dépression dans la chambre de combustion, et
f) évacuation de gaz brûlé de la chambre de précombustion et/ou de combustion par ladite vanne.

La présente invention propose un perfectionnement à cette technologie qui permet notamment de raccourcir la durée d'un cycle de tir.

### EXPOSE DE L'INVENTION

L'invention propose ainsi un procédé de fonctionnement d'un outil de fixation à gaz, ledit outil comportant une chambre de travail dans laquelle est monté coulissant un piston d'entraînement d'un élément de fixation, une chambre de précombustion dans laquelle la combustion d'un gaz est destinée à être initiée, et une chambre de combustion disposée entre la chambre de précombustion et la chambre de travail, lesdites chambres de précombustion et de combustion étant séparées l'une de l'autre par un clapet mobile ou déformable depuis une position dans laquelle il assure une communication fluidique entre lesdites chambres de précombustion et de combustion, et une position dans laquelle il isole ces chambres l'une de l'autre, l'outil comportant en outre au moins une vanne d'évacuation de gaz brûlé,
le procédé comprenant les étapes suivantes :
a) allumage du gaz dans la chambre de précombustion, entraînant une augmentation de la pression dans la chambre de précombustion,
b) déplacement ou déformation dudit clapet du fait de l'augmentation de la pression dans la chambre de précombustion au-delà d'un certain seuil, et passage de gaz dans la chambre de combustion,
c) combustion dudit gaz dans la chambre de combustion, entraînant une augmentation de la pression dans la chambre de combustion,
d) déplacement dudit piston depuis une position de repos jusqu'à une position de travail du fait de l'augmentation de pression dans la chambre de combustion,
e) déplacement inverse dudit piston depuis la position de travail du fait d'une dépression dans la chambre de combustion, et
f) évacuation de gaz brûlé de la chambre de précombustion et/ou de combustion par ladite vanne,
caractérisé en ce qu'il comprend, entre les étapes d) et f) ou e) et f), une étape supplémentaire de :
z) mise en communication fluidique desdites chambres de précombustion et de combustion de façon à ce qu'une dépression dans la chambre de précombustion participe au et accélère le déplacement inverse dudit piston depuis la position de travail jusqu'à la position de repos.

L'invention propose ainsi de profiter des volumes combinées des chambres de précombustion et de combustion, et donc des dépressions ou aspirations dans ces volumes, pour accélérer le retour du piston dans sa position de repos, sans perte de puissance de travail. Ceci permet de réduire la durée d'un cycle de tir de l'outil, qui peut ainsi être utilisé un plus grand nombre de fois sur une période de temps donnée.

Le procédé selon l'invention peut comprendre une ou plusieurs des caractéristiques ou étapes suivantes, prises isolément les unes des autres ou en combinaison les unes avec les autres :
- ladite mise en communication fluidique de l'étape z) est désactivée ou n'a pas lieu à l'étape a), c), et/ou d),
- ladite mise en communication fluidique de l'étape z) est activée ou a lieu uniquement entre les étapes d) et f) ou e) et f),
- ladite mise en communication fluidique de l'étape z) débute ou est activée à l'étape d) ou e), ou juste après l'étape d) ou e),
- ladite mise en communication fluidique de l'étape z) se termine ou est désactivée avant l'étape f),
- ladite mise en communication fluidique de l'étape z) est commandée pneumatiquement ou mécaniquement,
- la dépression à l'étape e) est au moins en partie obtenue par échappement de gaz de combustion à travers un orifice d'échappement de ladite chambre de travail.

La présente invention concerne encore un outil de fixation à gaz, comportant une chambre de travail dans laquelle est monté coulissant un piston d'entraînement d'un élément de fixation, une chambre de précombustion dans laquelle la combustion d'un gaz est destinée à être initiée, et une chambre de combustion disposée entre la chambre de précombustion et la chambre de travail, lesdites chambres de précombustion et de combustion étant séparées l'une de l'autre par un clapet mobile ou déformable depuis une position dans laquelle il assure une communication fluidique entre lesdites chambres de précombustion et de combustion, et une position dans laquelle il isole ces chambres l'une de l'autre, l'outil comportant en outre au moins une vanne d'évacuation de gaz brûlé, caractérisé en ce qu'il comprend des moyens de communication fluidique entre lesdites chambres de précombustion et de combustion, qui sont configurés pour être activés après un début de déplacement du piston depuis une position de repos jusqu'à une position de travail, et avant l'actionnement de ladite vanne pour l'évacuation de gaz brûlé à l'extérieur de la chambre de précombustion et/ou de combustion.

L'outil selon l'invention peut comprendre une ou plusieurs des caractéristiques ou étapes suivantes, prises isolément les unes des autres ou en combinaison les unes avec les autres :
- lesdits moyens de communication fluidique sont indépendants dudit clapet,
- lesdits moyens de communication fluidique sont configurés pour être désactivés lors d'un allumage et/ou de la combustion de gaz dans la chambre précombustion et/ou de combustion,
- lesdits moyens de communication fluidique sont configurés pour être activés seulement après le début de déplacement du piston, et avant l'actionnement de ladite vanne d'évacuation,
- lesdits moyens de communication fluidique sont configurés pour être commandés pneumatiquement ou mécaniquement,
- lesdits moyens de communication fluidique comprennent au moins un conduit formé dans un carter de la chambre de précombustion et/ou de la chambre de combustion,
- lesdits moyens de communication fluidique comprennent au moins un conduit formé dans un organe de support dudit clapet,
- ledit support a une forme allongée et est reliée à au moins une de ses extrémités longitudinales à un corps mobile d'une vanne, telle que ladite vanne d'évacuation.
- ledit support est relié à chacune de ses extrémités longitudinales à un corps mobile d'une vanne dont ladite vanne d'évacuation et une vanne d'admission de gaz,
- lesdits moyens de communication fluidique comprennent au moins une soupape mobile ou déplaçable entre une première position d'obturation dudit au moins un conduit, et une seconde position d'ouverture dudit au moins un conduit,
- ladite soupape est sollicitée par un moyen de rappel élastique dans sa première position,
- ladite soupape comprend un anneau disposé au voisinage dudit clapet et sollicité contre le clapet par ledit moyen de rappel,
- ladite soupape est formée d'une seule pièce avec ledit clapet ou fixé audit clapet,
- ladite soupape est solidaire d'un corps mobile de ladite vanne d'évacuation, et
- la soupape a une forme générale cylindrique tubulaire et comprend un orifice sensiblement radial et traversant, apte à être mis en communication fluidique avec ledit conduit.

### BREVE DESCRIPTION DES FIGURES

L'invention sera mieux comprise et d'autres détails, caractéristiques et avantages de la présente invention apparaîtront plus clairement à la lecture de la description qui suit, faite à titre d'exemple non limitatif et en référence aux dessins annexés, dans lesquels :
- les figures 1 a à 1f sont des vues très schématiques partielles en coupe d'un outil de fixation à gaz selon la technique antérieure, et illustrent des étapes de son procédé de fonctionnement,
- la figure 2 est un organigramme montrant des étapes d'un procédé selon l'art antérieur de fonctionnement d'un outil de fixation à gaz,
- les figures 3a à 3c sont des organigrammes montrant des variantes d'un procédé selon l'invention de fonctionnement d'un outil de fixation à gaz,
- les figures 4a à 4f sont des vues très schématiques partielles en coupe d'un mode de réalisation d'un outil de fixation à gaz selon l'invention, et illustrent des étapes de son procédé de fonctionnement,
- les figures 5a à 5f sont des vues très schématiques partielles en coupe d'une variante de réalisation d'un outil de fixation à gaz selon l'invention, et illustrent des étapes de son procédé de fonctionnement, et
- les figures 6a et 6b sont des vues schématiques partielles en coupe d'une autre variante de réalisation d'un outil de fixation à gaz selon l'invention, et illustrent des étapes de son procédé de fonctionnement.

### DESCRIPTION DETAILLEE

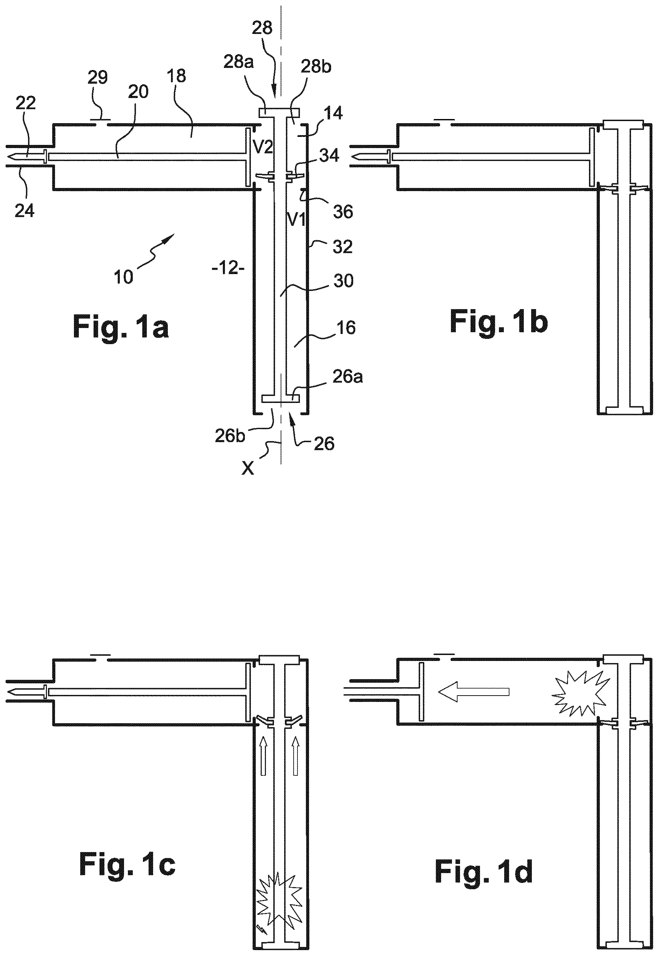

Les figures 1a à 1f illustrent un art antérieur à la présente invention.

L'outil de fixation 10 est partiellement représenté dans les dessins. Cet outil comporte un boîtier 12 dans lequel se trouve un moteur à combustion interne équipé de trois chambres : une chambre de combustion 14, une chambre de précombustion 16 et une chambre de travail 18.

Les chambres de précombustion 16 et de combustion 14 reçoivent un mélange d'air et de combustible dont la mise à feu provoque la propulsion d'un piston 20 dans la chambre de travail 18, le piston étant destiné à entraîner un élément de fixation 22 extrait d'un magasin d'alimentation, qui est destiné à s'ancrer dans un matériau support, à la sortie d'un guide-pointe 24 s'étendant à l'avant du boîtier 12. Bien que ce cela ne soit pas visible, le boîtier 12 de l'outil comprend une poignée de préhension et de manipulation de l'outil. La poignée sert également au tir, par une détente d'actionnement montée sur elle. Tous ces composants des outils de fixation à gaz sont connus de l'homme du métier et ils n'ont donc pas tous été représentés dans les dessins.

L'alimentation en combustible des chambres de précombustion 16 et de combustion 14 du moteur s'effectue, par l'intermédiaire d'un organe d'injection, à partir d'une cartouche de gaz combustible.

En pratique, la chambre de précombustion 16 reçoit un mélange air-combustible, dont l'allumage est provoqué dans la chambre de précombustion par une bougie ou analogue. La flamme produite pénètre alors dans la chambre de combustion 14 et la combustion du mélange se poursuit dans la chambre de combustion, l'explosion du mélange dans cette chambre provoquant le déplacement du piston 20 dans la chambre 18, et donc l'entraînement de l'élément de fixation 22.

Dans l'exemple représenté, la chambre de précombustion 16 a une forme allongée et comprend une extrémité longitudinale, ici supérieure, reliée à une extrémité longitudinale, inférieure, de la chambre de combustion 14 qui a également une forme allongée. Les axes d'allongement des chambres sont sensiblement parallèles voire confondus.

L'extrémité inférieure de la chambre de précombustion 16 est équipée d'une vanne 26 d'admission du gaz combustible délivré par la cartouche. La chambre de combustion 14 communique avec une extrémité, ici arrière, de la chambre de travail 18 et est équipée à son extrémité supérieure d'une vanne 28 d'évacuation des gaz de combustion. C'est par l'extrémité avant de la chambre de travail 18 qu'est propulsé l'élément de fixation 22.

La chambre de précombustion 16 a un volume V1 et la chambre de combustion 14 a un volume V2.

La chambre de travail 18 a également une forme allongée dont l'axe d'allongement est sensiblement perpendiculaire aux chambres de précombustion 16 et de combustion 14. La chambre 18 est équipée d'un orifice d'échappement 29.

Chacune des vannes 26, 28 comprend un corps mobile 26a, 28a, qui est déplaçable entre une position d'ouverture d'un orifice 26b, 28b, et une position de fermeture de l'orifice.

Les corps mobiles 26a, 26b des vannes 26, 28 sont reliés respectivement aux extrémités longitudinales d'une tige cylindrique 30 d'axe longitudinal X. Cette tige 30 a un diamètre inférieur au diamètre interne du carter 32 définissant les chambres 14, 16 et ayant ici en section transversale (perpendiculaire à l'axe X) une forme circulaire. Le diamètre de la tige 30 est de préférence compris entre 0,1 et 0,3 fois le diamètre interne du carter, et est par exemple de 0,15-0,16 fois le diamètre interne du carter.

La tige 30 porte un clapet 34, qui est mobile, le long de l'axe X, entre une première position de fermeture étanche d'un orifice de communication fluidique entre les chambres de précombustion 16 et de combustion 14, et donc d'isolement de ces chambres (figure 1b), et une position d'ouverture de l'orifice de communication et donc de communication fluidique entre les chambres de précombustion et de combustion (figure 1a). Le clapet 34 est situé à distance des extrémités longitudinales de la tige 30.

Le clapet 34 comprend par exemple un disque traversé par la tige 30 et solidaire de celle-ci. Le disque est destiné à coopérer avec un siège annulaire 36 du carter 32. La figure 1a illustre le clapet 34 en position ouverte, le disque étant éloigné de son siège 36. En position de fermeture, le disque coopère à étanchéité avec le siège 36 (figure 1b). Le siège 36 définit un orifice de passage de gaz depuis la chambre de précombustion 16 vers la chambre de combustion 14.

Le corps mobile 26a, 28a de chaque vanne 26, 28 peut comprendre un disque ou piston portant à sa périphérie externe un joint d'étanchéité destiné à coopérer avec une surface cylindrique interne de l'orifice 26a, 28b correspondant. Dans le cas présent, l'orifice 26b est un orifice d'admission de combustible et l'orifice 28b est un orifice d'évacuation des gaz de combustion.

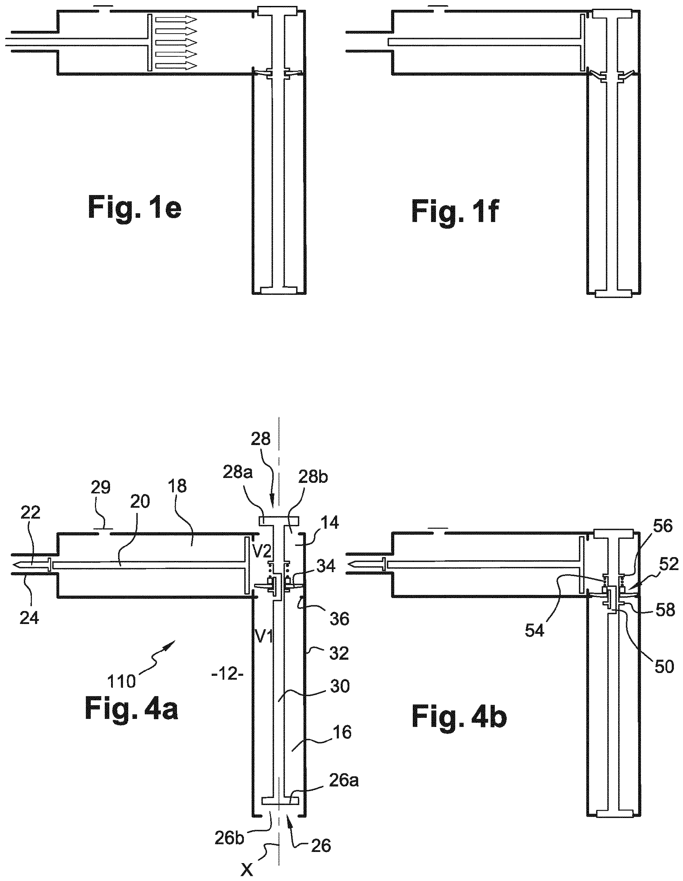

L'outil de fixation 10 fonctionne de la façon suivante. En général, la pose d'une extrémité de l'outil sur le matériau support dans lequel doit être posé un élément de fixation 22 permet de libérer une quantité de combustible de la cartouche, qui est acheminée depuis la cartouche jusqu'à l'orifice d'admission 26b. Le combustible pénètre dans la chambre de précombustion 16 du fait l'ouverture de la vanne 26 (corps mobile 26a en position haute ou d'ouverture - figure 1a). L'utilisateur bénéficie en général d'une durée de quelques secondes, avant que le combustible ne soit diffusé dans l'atmosphère, pour actionner la détente de l'outil. Lors de l'actionnement de la détente, les chambres 14, 16 sont isolées (figure 1b) et une étincelle est générée dans la chambre 16 par la bougie d'allumage. Cette étincelle provoque la précombustion du mélange air-combustible dans la chambre 16, ce qui entraîne une augmentation de pression dans la chambre 16. Lorsque cette pression dépasse un certain seuil, le clapet 34 s'ouvre et laisse passer le mélange dans la chambre de combustion 14 dont la pression augmente (figure 1c). Peu après, la flamme passe à son tour le clapet 34 et allume la chambre de combustion 14 et entraîne le déplacement du piston 20 et l'éjection d'un élément de fixation 22 dans le matériau support (figure 1d). Peu avant d'atteindre sa position sortie ou de travail, le piston 20 atteint et dépasse l'orifice d'échappement 29. Une partie des gaz brulés situés derrière le piston s'échappent par cet orifice 29, abaissant la pression de la chambre de travail et évacuant une partie des gaz chauds. Cet échappement génère une dépression dans la chambre de combustion qui a tendance à rappeler le piston dans sa position initiale de repos (figure 1e). Après le retour du piston dans sa position de repos (figure 1f), la vanne 28 s'ouvre pour chasser les gaz de combustion à travers l'orifice d'évacuation 28b.

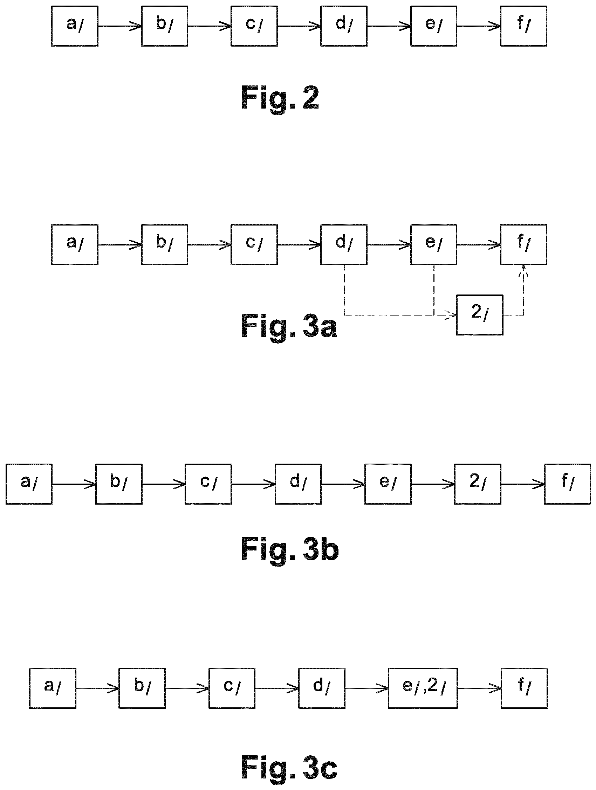

La figure 2 est un schéma bloc représentant les étapes du procédé de fonctionnement, ou cycle de tir, de l'outil de fixation à gaz décrit dans ce qui précède. Le procédé comprend globalement six étapes a) à f), qui sont :
a) allumage du gaz dans la chambre de précombustion, entraînant une augmentation de la pression dans la chambre de précombustion (figure 1c),
b) déplacement ou déformation du clapet du fait de l'augmentation de la pression dans la chambre de précombustion au-delà d'un certain seuil, et passage de gaz dans la chambre de combustion (figure 1c),
c) combustion du gaz dans la chambre de combustion, entraînant une augmentation de la pression dans la chambre de combustion (figure 1d),
d) déplacement du piston depuis la position de repos jusqu'à la position de travail du fait de l'augmentation de pression dans la chambre de combustion (figure 1d),
e) déplacement inverse du piston depuis la position de travail du fait d'une dépression dans la chambre de combustion (figure 1e), et
f) évacuation du gaz brûlé de la chambre de précombustion et/ou de combustion par la vanne d'évacuation (figures 1f et 1a).

Les figures 4a à 4f illustrent un premier mode de réalisation de l'invention dans lequel la description qui précède relative à l'art antérieur reste applicable. Pour accélérer le retour du piston 20 vers sa position de repos, l'invention prévoit, entre les étapes d) et f) ou e) et f), une étape supplémentaire z) de mise en communication fluidique des chambres de précombustion 16 et de combustion 14 de façon à ce qu'une dépression dans la chambre de précombustion participe au et accélère le déplacement inverse du piston depuis la position de travail jusqu'à la position de repos.

L'étape z) peut débuter à l'étape d) ou juste après (figure 3a), pendant l'étape e) (figure 3c) ou juste après celle-ci (figure 3b). Elle a lieu avant l'étape f), et peut se terminer juste avant l'étape f). De préférence, l'étape z) n'a pas lieu à l'étape a), c), et/ou d).

Dans l'exemple de réalisation des figures 4a à 4f, les moyens de mise en communication fluidique entre les chambres de précombustion 16 et de combustion 14 de l'outil 110 sont configurés pour être activés après un début de déplacement du piston 20 depuis la position de repos jusqu'à la position de travail, et avant l'actionnement de la vanne 28 pour l'évacuation des gaz brûlés à l'extérieur des chambres 14, 16.

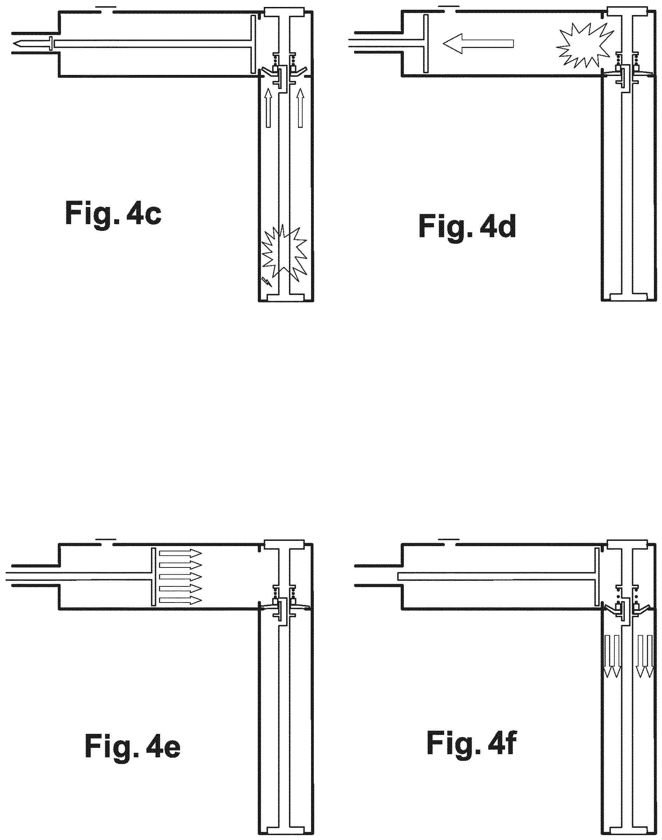

Les moyens de communication fluidique comprennent ici au moins un conduit 50 et au moins une soupape 52 mobile ou déplaçable entre une première position d'obturation du conduit (figures 4b-4e), et une seconde position d'ouverture du conduit (figures 4a et 4f).

Dans le cas des figures 4a à 4f, le conduit 50 est formé dans la tige 30. Il a une forme sensiblement en U et comprend une portion médiane de forme allongée s'étendant sensiblement à l'intérieur de la tige 30 le long de l'axe X. Cette portion médiane est reliée à une portion d'extrémité supérieure qui est apte à communiquer avec la chambre de combustion 14, et une portion d'extrémité inférieure qui est apte à communiquer avec la chambre de précombustion 16. Les portions du conduit sont sensiblement coplanaires. Le clapet 34, et en particulier son disque, est situé dans un plan sensiblement perpendiculaire au plan du conduit 50 et passant sensiblement au milieu du conduit.

La soupape 52 a ici une forme annulaire et est traversée par la tige 30. Elle est indépendante du clapet 34 et sollicitée contre l'extrémité ou face supérieure de celui-ci par un moyen 54 de rappel élastique, monté entre la soupape 52 et un rebord annulaire externe 56 de la tige (situé au niveau de la chambre de combustion 14). Le moyen de rappel 54 est ici un ressort de compression.

Dans l'exemple représenté, le clapet 34 est également monté mobile le long de l'axe X sur la tige 30 et est sollicité par l'intermédiaire du moyen de rappel 54 contre un autre rebord annulaire externe 58 de la tige, pouvant être situé au niveau de l'une des chambres 14, 16. La portion supérieure du conduit débouche entre les rebords 56, 58 et sa portion inférieure débouche sous le rebord 58.

En variante, la soupape 52 est formée d'une seule pièce avec le clapet ou fixé au clapet.

La soupape 52 est mobile en coulissement le long de la tige 30, c'est-à-dire le long de l'axe X, entre une première position de repos, ici haute, dans laquelle elle est située en regard de la portion d'extrémité supérieure du conduit 50 et obture celle-ci, empêchant ainsi le passage de gaz à travers le conduit, et une seconde position, ici basse, dans laquelle elle est décalée axialement de la portion d'extrémité supérieure du conduit, ici vers le bas, le conduit assurant dès lors une communication fluidique entre les chambres de précombustion 16 et de combustion 14.

Les moyens de communication fluidique sont ici configurés pour être commandés pneumatiquement, en particulier par la pression régnant dans la chambre de combustion 14. La soupape 52 est configurée pour être dans sa position de repos (haute) lors des étapes d'allumage et de combustion de gaz dans les chambres précombustion 16 et de combustion 14 (figures 4c et 4d). La mise en communication fluidique des chambres 14, 16 par le conduit 50 est alors désactivée. La seule communication fluidique qui a lieu est celle obtenue du fait de l'ouverture du clapet 30 (figure 4c).

La soupape 52 est en outre configurée pour être déplacée de sa position de repos à sa position basse pendant le déplacement du piston 20 ou seulement après le début de déplacement du piston 20, et avant l'actionnement de la vanne d'évacuation 28. La mise en communication des chambres 14, 16 par le conduit 50 est alors ici activée.

L'activation de la mise en communication des chambres 14, 16, c'est-à-dire le déplacement de la soupape 52, résulte d'une différence de pression entre les chambres 14, 16 (la pression dans la chambre de combustion 14 étant supérieure à la pression dans la chambre de précombustion 16 dans laquelle a donc lieu une dépression), qui est supérieure à un certain seuil et qui est appliquée pendant une durée suffisante pour provoquer ce déplacement. En pratique, une telle différence de pression intervient à deux reprises pendant un cycle de tir : au moment où l'explosion a lieu dans la chambre de combustion 14 (figure 4d) et au moment où le piston retourne de sa position de travail à sa position de repos (figure 4e), ou est sur le point de repartir dans sa position de repos. Dans ces deux cas, les conditions en termes de pression sont suffisantes pour provoquer le déplacement de la soupape 52. Toutefois, la vitesse d'explosion dans le premier cas (figure 4d) est très importante si bien que la différence de pression à ce stade n'est pas appliquée pendant une période de temps suffisante pour permettre à la soupape 52 de se déplacer. La durée d'explosion est en général de quelques millisecondes. Au contraire, la durée pendant laquelle le piston 20 revient dans sa position de repos (figure 4e) peut être de plusieurs dizaines de millisecondes, ce qui est une durée suffisante pour permettre à la soupape 52 de se déplacer du fait de la différence de pression précitée. C'est ainsi que les caractéristiques de la soupape 52 peuvent être déterminées pour que la mise en communication fluidique des chambres 14, 16 n'intervienne que pendant certaines étapes d'un cycle de tir et non pas dans toutes les étapes, telles que l'étape de passage de la flamme de la chambre de précombustion 16 vers la chambre de combustion 14 (figure 4c).

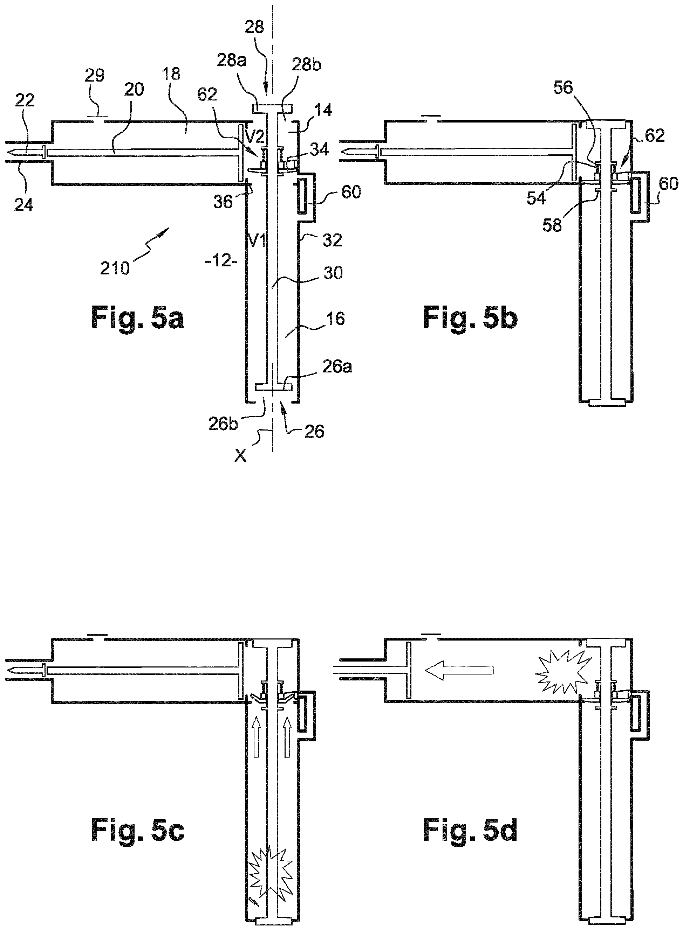

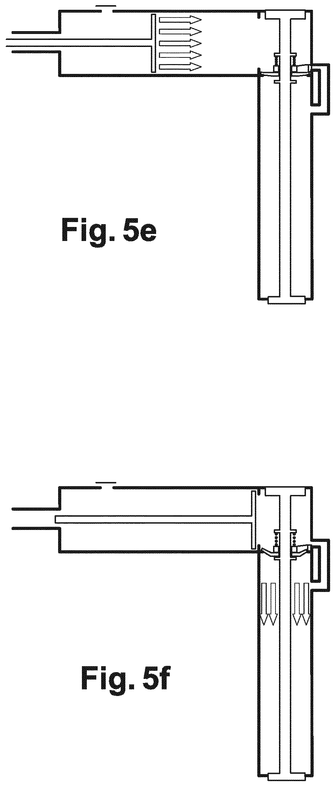

Dans la variante de réalisation des figures 5a à 5f, les moyens de mise en communication fluidique entre les chambres 14, 16 de l'outil 210 sont également configurés pour être activés après un début de déplacement du piston 20 depuis la position de repos jusqu'à la position de travail, et avant l'actionnement de la vanne 28 pour l'évacuation du gaz brûlé à l'extérieur des chambres.

Les moyens de communication fluidique comprennent ici au moins un conduit 60 et au moins une soupape 62 mobile ou déplaçable entre une première position d'obturation du conduit (figures 5b-5e), et une seconde position d'ouverture du conduit (figures 5a et 5f).

Dans le cas des figures 5a à 5f, le conduit 60 est formé dans le carter 32 des chambres 14, 16. Il a une forme sensiblement en U et comprend une portion médiane de forme allongée s'étendant sensiblement sur un côté des chambres, le long de l'axe X. Cette portion médiane est reliée à une portion d'extrémité supérieure qui est apte à communiquer avec la chambre de combustion 14, et une portion d'extrémité inférieure qui est apte à communiquer avec la chambre de précombustion 16. Les portions du conduit sont sensiblement coplanaires. Le clapet 34, et en particulier son disque, est situé dans un plan sensiblement perpendiculaire au plan du conduit et passant sensiblement au niveau du conduit.

La soupape 62 a ici une forme annulaire et est traversée par la tige 30. Elle est indépendante du clapet 34 et sollicitée contre l'extrémité ou face supérieure de celui-ci par un moyen 54 de rappel élastique, monté entre la soupape 62 et un rebord annulaire externe 56 de la tige (situé au niveau de la chambre de combustion 14). Le moyen de rappel est ici un ressort de compression.

Dans l'exemple représenté, le clapet 34 est également monté mobile le long de l'axe X sur la tige 30 et est sollicité par l'intermédiaire du moyen de rappel 54 contre un autre rebord annulaire externe 58 de la tige, pouvant être situé au niveau de l'une des chambres 14, 16. La portion supérieure du conduit débouche entre les rebords 56, 58 et sa portion inférieure débouche sous le rebord 58.

En variante, la soupape 62 peut être formée d'une seule pièce avec le clapet 34 ou fixé au clapet. Elle a ici une forme particulière puisqu'elle comprend une languette transversale orientée sensiblement radialement par rapport à l'axe X, et dont l'extrémité libre radialement externe coopère par glissement avec la surface interne (par exemple cylindrique) du carter 32.

La soupape 62 est mobile en coulissement le long de la tige 30, c'est-à-dire le long de l'axe X, entre une première position de repos, ici haute, dans laquelle elle est située en regard de la portion d'extrémité supérieure du conduit 60 et obture celle-ci, empêchant ainsi le passage de gaz à travers le conduit, et une seconde position, ici basse, dans laquelle elle est décalée axialement de la portion d'extrémité supérieure du conduit, ici vers le bas, le conduit 60 assurant dès lors une communication fluidique entre les chambres de précombustion 16 et de combustion 14.

Les moyens de communication fluidique sont ici configurés pour être commandés pneumatiquement, en particulier par la pression régnant dans la chambre de combustion 14. La soupape 62 est configurée pour être dans sa position de repos (haute) lors des étapes d'allumage et de combustion de gaz dans les chambres précombustion 16 et de combustion 14 (figures 5c et 5d). La mise en communication fluidique des chambres 14, 16 par le conduit 60 est alors désactivée. La seule communication fluidique qui a lieu est celle obtenue du fait de l'ouverture du clapet 30 (figure 5c).

La soupape 62 est en outre configurée pour être déplacée de sa position de repos à sa position basse pendant le déplacement du piston 20 ou seulement après le début de déplacement du piston 20, et avant l'actionnement de la vanne d'évacuation 28. La mise en communication des chambres 14, 16 par le conduit 60 est alors ici activée.

Le fonctionnement des moyens de communication fluidiques (conduit 60 et soupape 62) sont similaires à celui des moyens de communication (conduit 50 et soupape 52) du précédent mode de réalisation décrit dans ce qui précède.

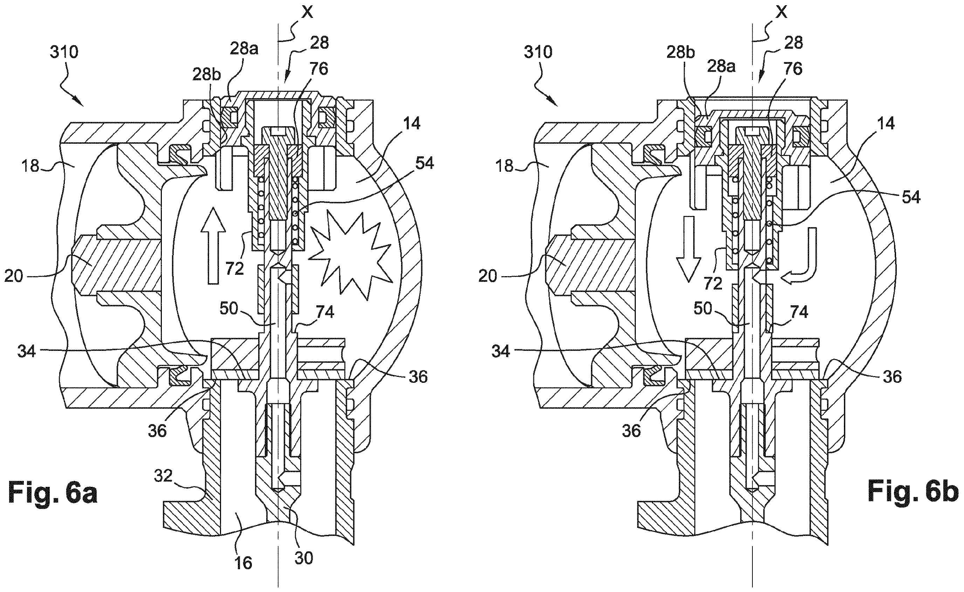

Les figures 6a et 6b illustrent un exemple plus concret de variante de réalisation de l'outil 310 selon l'invention. Cet outil 310 comprend les mêmes caractéristiques que les outils 10, 110 décrits ci-dessus, dans la mesure où elles ne sont pas en contradiction avec ce qui suit.

Les références utilisées ci-dessus pour décrire les caractéristiques des outils 10, 110 sont réutilisées dans les figures 6a, 6b pour désigner les mêmes caractéristiques de l'outil 310.

Les moyens de mise en communication fluidique entre les chambres de précombustion 16 et de combustion 14 de l'outil 310 sont configurés pour être activés après un début de déplacement du piston 20 depuis la position de repos jusqu'à la position de travail, et avant l'actionnement de la vanne 28 pour l'évacuation des gaz brûlés à l'extérieur des chambres 14, 16.

Les moyens de communication fluidique comprennent ici au moins un conduit 50 et au moins une soupape 72 mobile ou déplaçable entre une première position d'obturation du conduit (figure 6a), et une seconde position d'ouverture du conduit (figures 6b).

Comme pour l'outil 110, le conduit 50 est formé dans la tige 30. Il a une forme sensiblement en U et comprend une portion médiane de forme allongée s'étendant sensiblement à l'intérieur de la tige 30 le long de l'axe X. Cette portion médiane est reliée à une portion d'extrémité supérieure qui est apte à communiquer avec la chambre de combustion 14, et une portion d'extrémité inférieure qui est apte à communiquer avec la chambre de précombustion 16. Les portions du conduit sont sensiblement coplanaires.

La soupape 72 a ici une forme annulaire générale cylindrique et tubulaire et est monté coaxialement autour de la tige 30, au niveau de son extrémité supérieure. La soupape 72 est essentiellement logée dans la chambre de combustion 14. Dans l'exemple représenté, elle est indépendante du clapet 34 et solidaire du corps mobile 28a de la vanne 28.

La soupape 72 comprend des moyens de butée axiale, vis-à-vis de l'axe X, destinés à coopérer avec des moyens complémentaires de la tige 30 pour limiter sa course le long de l'axe X et définir les positions précitées de la soupape. Des premiers moyens de butée sont formés par l'extrémité libre inférieure de la soupape 72 qui est destinée à coopérer avec une portée cylindrique 74 de la tige, située ici juste au-dessus du clapet 34. Des seconds moyens de butée sont formés par une portée cylindrique interne de la soupape 72 qui est destinée à coopérer avec une bague 76 rapportée et fixée à l'extrémité supérieure de la tige 30. Les premiers moyens coopèrent avec la portée 74 pour définir la position d'ouverture précitée (figure 6b) et les seconds moyens coopèrent avec la bague 76 pour définir la seconde position d'obturation précitée (figure 6a).

Un moyen 54 de rappel élastique est monté entre la soupape 52 et la bague 76 et permet de solliciter la soupape dans sa première position. Le moyen de rappel 54 est ici un ressort de compression.

Le clapet 34, et en particulier son disque, est situé dans un plan sensiblement perpendiculaire au plan du conduit 50 et passant sensiblement au milieu du conduit. Dans l'exemple représenté, le clapet 34 peut être fixe le long de l'axe X sur la tige 30 et est destiné à coopérer avec un siège annulaire 36 du carter 32.

Le corps mobile 28a de la vanne 28 comprend ici un piston portant à sa périphérie externe un joint d'étanchéité destiné à coopérer avec une surface cylindrique interne de l'orifice 28b. Le piston entoure l'extrémité supérieure de la soupape et peut être fixé à celle-ci par vissage, comme dans l'exemple représenté.

Le fonctionnement des moyens de communication fluidiques (conduit 50 et soupape 72) sont similaires à celui des moyens de communication (conduit 50 et soupape 52) décrit dans ce qui précède.

Dans une variante de réalisation non représentée, les moyens de communication pourraient être activables mécaniquement par exemple par l'intermédiaire d'un levier actionné lors de la remontée du piston.

## Revendications

1. Procédé de fonctionnement d'un outil (110, 210, 310) de fixation à gaz,
ledit outil comportant une chambre de travail (18) dans laquelle est monté coulissant un piston (20) d'entraînement d'un élément de fixation (22), une chambre de précombustion (16) dans laquelle la combustion d'un gaz est destinée à être initiée, et une chambre de combustion (14) disposée entre la chambre de précombustion et la chambre de travail, lesdites chambres de précombustion et de combustion étant séparées l'une de l'autre par un clapet (34) mobile ou déformable depuis une position dans laquelle il assure une communication fluidique entre lesdites chambres de précombustion et de combustion, et une position dans laquelle il isole ces chambres l'une de l'autre, l'outil comportant en outre au moins une vanne (28) d'évacuation de gaz brûlé,
le procédé comprenant les étapes suivantes :
a) allumage du gaz dans la chambre de précombustion, entraînant une augmentation de la pression dans la chambre de précombustion,
b) déplacement ou déformation dudit clapet du fait de l'augmentation de la pression dans la chambre de précombustion au-delà d'un certain seuil, et passage de gaz dans la chambre de combustion,
c) combustion dudit gaz dans la chambre de combustion, entraînant une augmentation de la pression dans la chambre de combustion,
d) déplacement dudit piston depuis une position de repos jusqu'à une position de travail du fait de l'augmentation de pression dans la chambre de combustion,
e) déplacement inverse dudit piston depuis la position de travail du fait d'une dépression dans la chambre de combustion, et
f) évacuation de gaz brûlé de la chambre de précombustion et/ou de combustion par ladite vanne,
**caractérisé en ce qu'**il comprend, entre les étapes d) et f) ou e) et f), une étape supplémentaire de :
z) mise en communication fluidique desdites chambres de précombustion et de combustion de façon à ce qu'une dépression dans la chambre de précombustion participe au et accélère le déplacement inverse dudit piston depuis la position de travail jusqu'à la position de repos.

2. Procédé selon la revendication 1, dans laquelle ladite mise en communication fluidique de l'étape z) est désactivée ou n'a pas lieu à l'étape a), c), et/ou d).

3. Procédé selon la revendication 1 ou 2, dans laquelle ladite mise en communication fluidique de l'étape z) est activée ou a lieu uniquement entre les étapes d) et f) ou e) et f).

4. Procédé selon l'une des revendications précédentes, dans laquelle ladite mise en communication fluidique de l'étape z) débute ou est activée à l'étape d) ou e), ou juste après l'étape d) ou e).

5. Procédé selon l'une des revendications précédentes, dans laquelle ladite mise en communication fluidique de l'étape z) se termine ou est désactivée avant l'étape f).

6. Procédé selon l'une des revendications précédentes, dans laquelle ladite mise en communication fluidique de l'étape z) est commandée pneumatiquement ou mécaniquement.

7. Outil (110, 210) de fixation à gaz, comportant une chambre de travail (18) dans laquelle est monté coulissant un piston (20) d'entraînement d'un élément de fixation (22), une chambre de précombustion (16) dans laquelle la combustion d'un gaz est destinée à être initiée, et une chambre de combustion (14) disposée entre la chambre de précombustion et la chambre de travail, lesdites chambres de précombustion et de combustion étant séparées l'une de l'autre par un clapet (34) mobile ou déformable depuis une position dans laquelle il assure une communication fluidique entre lesdites chambres de précombustion et de combustion, et une position dans laquelle il isole ces chambres l'une de l'autre, l'outil comportant en outre au moins une vanne (28) d'évacuation de gaz brûlé, **caractérisé en ce qu'**il comprend des moyens (50, 52, 60, 62, 72) de communication fluidique entre lesdites chambres de précombustion et de combustion, qui sont configurés pour être activés après un début de déplacement du piston depuis une position de repos jusqu'à une position de travail, et avant l'actionnement de ladite vanne pour l'évacuation de gaz brûlé à l'extérieur de la chambre de précombustion et/ou de combustion.

8. Outil (110, 210) selon la revendication précédente, dans lequel lesdits moyens de communication fluidique (50, 52, 60, 62, 72) sont indépendants dudit clapet (34).

9. Outil (110, 210) selon la revendication 7 ou 8, dans lequel lesdits moyens de communication fluidique (50, 52, 60, 62, 72) sont configurés pour être désactivés lors d'un allumage et/ou de la combustion de gaz dans la chambre précombustion et/ou de combustion.

10. Outil (110, 210) selon l'une des revendications 7 à 9, dans lequel lesdits moyens de communication fluidique (50, 52, 60, 62, 72) sont configurés pour être activés seulement après le début de déplacement du piston (20), et avant l'actionnement de ladite vanne d'évacuation.

11. Outil (110, 210) selon l'une des revendications 7 à 10, dans lequel lesdits moyens de communication fluidique (50, 52, 60, 62, 72) sont configurés pour être commandés pneumatiquement ou mécaniquement.

12. Outil (210) selon l'une des revendications 7 à 11, dans lequel lesdits moyens de communication fluidique (60, 62) comprennent au moins un conduit (60) formé dans un carter (32) de la chambre de précombustion (16) et/ou de la chambre de combustion (14).

13. Outil (110) selon l'une des revendications 7 à 11, dans lequel lesdits moyens de communication fluidique (50, 52, 72) comprennent au moins un conduit (50) formé dans un organe (30) de support dudit clapet (34).

14. Outil (110, 210) selon la revendication précédente, dans lequel ledit support (30) a une forme allongée et est reliée à au moins une de ses extrémités longitudinales à un corps mobile (26a, 28a) d'une vanne (26, 28), telle que ladite vanne d'évacuation.

15. Outil (110, 210) selon la revendication précédente, dans lequel ledit support (30) est relié à chacune de ses extrémités longitudinales à un corps mobile (26a, 28a) d'une vanne dont ladite vanne d'évacuation (28) et une vanne (26) d'admission de gaz.

16. Outil (110, 210) selon l'une des revendications 12 à 15, dans lequel lesdits moyens de communication fluidique (50, 52, 60, 62, 72) comprennent au moins une soupape (52, 62, 72) mobile ou déplaçable entre une première position d'obturation dudit au moins un conduit (50, 60), et une seconde position d'ouverture dudit au moins un conduit.

17. Outil (110, 210) selon la revendication précédente, dans lequel ladite soupape (52, 62, 72) est sollicitée par un moyen (54) de rappel élastique dans sa première position.

18. Outil selon la revendication 17, dans lequel ladite soupape (52, 62) comprend un anneau disposé au voisinage dudit clapet (34) et sollicité contre le clapet par ledit moyen de rappel (54).

19. Outil (110, 210) selon la revendication 16 ou 17, dans lequel ladite soupape (52, 62) est formée d'une seule pièce avec ledit clapet (34) ou fixé audit clapet.

20. Outil selon la revendication 17, dans lequel ladite soupape (72) est solidaire d'un corps mobile (28a) de ladite vanne d'évacuation (28).

21. Outil selon la revendication précédente, dans lequel la soupape (72) a une forme générale cylindrique tubulaire et comprend un orifice sensiblement radial et traversant, apte à être mis en communication fluidique avec ledit conduit (60).

## Patentansprüche

1. Betriebsverfahren eines gasbetriebenen Befestigungswerkzeugs (110, 210, 310),
wobei das Werkzeug eine Arbeitskammer (18), in die ein Antriebskolben (20) eines Befestigungselements (22) gleitend montiert ist, eine Vorkammer (16), in der die Verbrennung gestartet werden soll, und eine Brennkammer (14) aufweist, die zwischen der Vorkammer und der Arbeitskammer angeordnet ist,
wobei die Vor- und die Brennkammer durch eine Ventilklappe (34) voneinander getrennt sind, die von einer Stellung, in der sie eine Fluidverbindung zwischen der Vor- und der Brennkammer gewährleistet, und einer Stellung beweglich oder verformbar ist, in der sie diese Kammern voneinander isoliert, wobei das Werkzeug außerdem mindestens ein Abfuhrventil (28) für verbranntes Gas aufweist,
wobei das Verfahren die folgenden Schritte aufweist:
a) Zünden des Gases in der Vorkammer, was eine Erhöhung des Drucks in der Vorkammer bewirkt,
b) Verschieben oder Verformen der Ventilklappe aufgrund der Erhöhung des Drucks in der Vorkammer über eine bestimmte Schwelle hinaus, und Übergang von Gas in die Brennkammer,
c) Verbrennen des Gases in der Brennkammer, was eine Erhöhung des Drucks in der Brennkammer bewirkt,
d) Verschieben des Kolbens von einer Ruhestellung bis in eine Arbeitsstellung aufgrund der Druckerhöhung in der Brennkammer,
e) umgekehrte Verschiebung des Kolbens von der Arbeitsstellung aufgrund eines Unterdrucks in der Brennkammer, und
f) Abfuhr von verbranntem Gas von der Vorkammer und/oder der Brennkammer durch das Ventil,
**dadurch gekennzeichnet, dass** es zwischen den Schritten d) und f) oder e) und f) einen zusätzlichen Schritt enthält der:
z) Fluidverbindung der Vorkammer und der Brennkammer, damit ein Unterdruck in der Vorkammer an der umgekehrten Verschiebung des Kolbens von der Arbeitsstellung in die Ruhestellung mitwirkt und sie beschleunigt.

2. Verfahren nach Anspruch 1, wobei die Fluidverbindung des Schritts z) im Schritt a), c) und/oder d) deaktiviert ist oder nicht stattfindet.

3. Verfahren nach Anspruch 1 oder 2, wobei die Fluidverbindung des Schritts z) nur zwischen den Schritten d) und f) oder e) und f) aktiviert wird oder stattfindet.

4. Verfahren nach einem der vorhergehenden Ansprüche, wobei die Fluidverbindung des Schritts z) im Schritt d) oder e) oder direkt nach dem Schritt d) oder e) beginnt oder aktiviert wird.

5. Verfahren nach einem der vorhergehenden Ansprüche, wobei die Fluidverbindung des Schritts z) vor dem Schritt f) endet oder deaktiviert wird.

6. Verfahren nach einem der vorhergehenden Ansprüche, wobei die Fluidverbindung des Schritts z) pneumatisch oder mechanisch gesteuert wird.

7. Gasbetriebenes Befestigungswerkzeug (110, 210), das eine Arbeitskammer (18) aufweist, in die ein Antriebskolben (20) eines Befestigungselements (22) gleitend montiert ist, eine Vorkammer (16), in der die Verbrennung gestartet werden soll, und eine Brennkammer (14) aufweist, die zwischen der Vorkammer und der Arbeitskammer angeordnet ist, wobei die Vor- und die Brennkammer durch eine Ventilklappe (34) voneinander getrennt sind, die von einer Stellung, in der sie eine Fluidverbindung zwischen der Vor- und der Brennkammer gewährleistet, und einer Stellung beweglich oder verformbar ist, in der sie diese Kammern voneinander isoliert, wobei das Werkzeug außerdem mindestens ein Abfuhrventil (28) für verbranntes Gas aufweist, **dadurch gekennzeichnet, dass** es Einrichtungen (50, 52, 60, 62, 72) zur Fluidverbindung zwischen der Vorkammer und der Brennkammer enthält, die konfiguriert sind, nach einem Beginn der Verschiebung des Kolbens von einer Ruhestellung bis zu einer Arbeitsstellung und vor der Betätigung des Ventils zur Abfuhr von verbranntem Gas nach außerhalb der Vor- und/oder Brennkammer aktiviert zu werden.

8. Werkzeug (110, 210) nach dem vorhergehenden Anspruch, wobei die Fluidverbindungseinrichtungen (50, 52, 60, 62, 72) von der Ventilklappe (34) unabhängig sind.

9. Werkzeug (110, 210) nach Anspruch 7 oder 8, wobei die Fluidverbindungseinrichtungen (50, 52, 60, 62, 72) konfiguriert sind, bei einem Zünden und/oder beim Verbrennen von Gas in der Vor- und/oder Brennkammer deaktiviert zu werden.

10. Werkzeug (110, 210) nach einem der Ansprüche 7 bis 9, wobei die Fluidverbindungseinrichtungen (50, 52, 60, 62, 72) konfiguriert sind, nur nach dem Beginn der Verschiebung des Kolbens (20) und vor der Betätigung des Abfuhrventils aktiviert zu werden.

11. Werkzeug (110, 210) nach einem der Ansprüche 7 bis 10, wobei die Fluidverbindungseinrichtungen (50, 52, 60, 62, 72) konfiguriert sind, pneumatisch oder mechanisch gesteuert zu werden.

12. Werkzeug (210) nach einem der Ansprüche 7 bis 11, wobei die Fluidverbindungseinrichtungen (60, 62) mindestens einen Kanal (60) enthalten, der in einem Gehäuse (32) der Vorkammer (16) und/oder der Brennkammer (14) geformt ist.

13. Werkzeug (110) nach einem der Ansprüche 7 bis 11, wobei die Fluidverbindungseinrichtungen (50, 52, 72) mindestens einen Kanal (50) enthalten, der in einem Trägerorgan (30) der Ventilklappe (34) geformt ist.

14. Werkzeug (110, 210) nach dem vorhergehenden Anspruch, wobei der Träger (30) eine längliche Form hat und an mindestens einem seiner Längsenden mit einem beweglichen Körper (26a, 28a) eines Ventils (26, 28) wie des Abfuhrventils verbunden ist.

15. Werkzeug (110, 210) nach dem vorhergehenden Anspruch, wobei der Träger (30) an jedem seiner Längsenden mit einem beweglichen Körper (26a, 28a) eines Ventils verbunden ist, darunter das Abfuhrventil (28) und ein Gaseinlassventil (26).

16. Werkzeug (110, 210) nach einem der Ansprüche 12 bis 15, wobei die Fluidverbindungseinrichtungen (50, 52, 60, 62, 72) mindestens einen Schieber (52, 62, 72) enthalten, der zwischen einer ersten Verschlussstellung des mindestens einen Kanals (50, 60) und einer zweiten Öffnungsstellung des mindestens einen Kanals beweglich oder verschiebbar ist.

17. Werkzeug (110, 210) nach dem vorhergehenden Anspruch, wobei der Schieber (52, 62, 72) von einer elastischen Rückstelleinrichtung (54) in seine erste Stellung beaufschlagt wird.

18. Werkzeug nach Anspruch 17, wobei der Schieber (52, 62) einen Ring enthält, der in der Nähe der Ventilklappe (34) angeordnet ist und von der Rückstelleinrichtung (54) gegen die Ventilklappe beaufschlagt wird.

19. Werkzeug (110, 210) nach Anspruch 16 oder 17, wobei der Schieber (52, 62) aus einem Stück mit der Ventilklappe (34) geformt oder an der Ventilklappe befestigt ist.

20. Werkzeug nach Anspruch 17, wobei der Schieber (72) fest mit einem beweglichen Körper (28a) des Abfuhrventils (28) verbunden ist.

21. Werkzeug nach dem vorhergehenden Anspruch, wobei der Schieber (72) eine allgemein rohrförmige zylindrische Form hat und eine im Wesentlichen radiale und durchgehende Öffnung enthält, die mit dem Kanal (60) in Fluidverbindung gebracht werden kann.

## Claims

1. Method for operation of a gas-powered fixing tool,
said tool comprising a working chamber in which a piston is slidably mounted for driving a fixing element, a precombustion chamber in which the combustion of a gas is intended to be initiated, and a combustion chamber arranged between the precombustion chamber and the working chamber, said precombustion and combustion chambers being separated from each other by a flap which is movable or deformable from a position in which it ensures a fluidic communication between said precombustion and combustion chambers and a position in which it isolates these chambers from each other, the tool also comprising at least one combusted gas evacuation valve,
the method comprising the following steps:
a) ignition of the gas in the precombustion chamber, causing an increase in pressure in the precombustion chamber,
b) displacement or deformation of said flap because of the increase in pressure in the precombustion chamber above a certain threshold, and passage of the gas into the combustion chamber,
c) combustion of said gas in the combustion chamber, causing an increase in pressure in the combustion chamber,
d) displacement of said piston from a rest position to a working position because of the increase in pressure in the combustion chamber,
e) reverse displacement of said piston from the working position because of a reduced pressure in the combustion chamber, and
f) evacuation of combusted gas from the precombustion chamber and/or the combustion chamber via said valve,
**characterized in that** it comprises, between steps d) and f) or e) and f), an additional step of:
z) establishment of fluidic communication between said precombustion and combustion chambers, such that a reduced pressure in the precombustion chamber participates in and accelerates the reverse displacement of said piston from the working position to the rest position.

2. Method according to Claim 1, wherein said establishment of fluidic communication in step z) is deactivated or does not take place in step a), c) and/or d).

3. Method according to Claim 1 or 2, wherein said establishment of fluidic communication of step z) is activated or takes place only between steps d) and f) or e) and f).

4. Method according to any of the preceding claims, wherein said establishment of fluidic communication of step z) begins or is activated in step d) or e), or just after step d) or e).

5. Method according to any of the preceding claims, wherein said establishment of fluidic communication of step z) is terminated or deactivated before step f).

6. Method according to any of the preceding claims, wherein said establishment of fluidic communication of step z) is controlled pneumatically or mechanically.

7. Gas-powered fixing tool, comprising a working chamber in which a piston is slidably mounted for driving a fixing element, a precombustion chamber in which the combustion of a gas is intended to be initiated, and a combustion chamber arranged between the precombustion chamber and the working chamber, said precombustion and combustion chambers being separated from each other by a flap which is movable or deformable from a position in which it ensures a fluidic communication between said precombustion and combustion chambers and a position in which it isolates these chambers from each other, the tool also comprising at least one combusted gas evacuation valve, **characterized in that** it comprises means for fluidic communication between said precombustion and combustion chambers, which means are configured to be activated after a start of displacement of the piston from a rest position to a working position, and before actuation of said valve for evacuation of combusted gas to the outside of the precombustion and/or combustion chamber.

8. Tool according to the preceding claim, wherein said fluidic communication means are independent of said flap.

9. Tool according to Claim 7 or 8, wherein said fluidic communication means are configured to be deactivated on ignition and/or combustion of gas in the precombustion and/or combustion chamber.

10. Tool according to any of Claims 7 to 9, wherein said fluidic communication means are configured to be activated only after the start of displacement of the piston and before actuation of said evacuation valve.

11. Tool according to any of Claims 7 to 10, wherein said fluidic communication means are configured to be controlled pneumatically or mechanically.

12. Tool according to any of Claims 7 to 11, wherein said fluidic communication means comprise at least one conduit formed in a housing of the precombustion chamber and/or the combustion chamber.

13. Tool according to any of Claims 7 to 11, wherein said fluidic communication means comprise at least one conduit formed in a support body for said flap.

14. Tool according to the preceding claim, wherein said support has an elongated form and is connected by at least one of its longitudinal ends to a mobile body of a valve, such as said evacuation valve.

15. Tool according to the preceding claim, wherein said support is connected by each of its longitudinal ends to a mobile body of a valve, being said evacuation valve and a gas inlet valve.

16. Tool according to any of Claims 12 to 15, wherein said fluidic communication means comprise at least one valve which is moveable or displaceable between a first position of sealing said at least one conduit and a second position of opening said at least one conduit.

17. Tool according to the preceding claim, wherein said valve is stressed by an elastic return means in its first position.

18. Tool according to Claim 17, wherein said valve comprises a ring arranged close to said flap and stressed against the flap by said return means.

19. Tool according to Claim 16 or 17, wherein said valve is formed of one piece with said flap or fixed to said flap.

20. Tool according to Claim 17, in which said valve is secured to a mobile body of said evacuation valve.

21. Tool according to the preceding claim, in which the valve has a cylindrical tubular overall shape and comprises a substantially radial through-orifice able to be placed in fluidic communication with said conduit.
